(19) **Europäisches Patentamt**
**European Patent Office**
**Office européen des brevets**

(11) **EP 3 032 189 B1**

(12) **EUROPÄISCHE PATENTSCHRIFT**

(45) Veröffentlichungstag und Bekanntmachung des Hinweises auf die Patenterteilung:
**28.03.2018 Patentblatt 2018/13**

(51) Int Cl.:
*F16L 9/00* *(2006.01)*  *F24T 10/10* *(2018.01)*

(21) Anmeldenummer: **16152122.4**

(22) Anmeldetag: **11.09.2012**

(54) **ERDWÄRMESONDENROHR**

GEOTHERMAL PROBE TUBE

TUBE DE SONDE GEOTHERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.06.2016 Patentblatt 2016/24**

(62) Dokumentnummer(n) der früheren Anmeldung(en) nach Art. 76 EPÜ:
**12006371.4 / 2 706 308**

(73) Patentinhaber: **HakaGerodur AG**
**9200 Gossau (CH)**

(72) Erfinder:
• **Ebnöther, Alfons**
**8637 Laupen (CH)**
• **Mayer, Peter**
**8717 Benken (CH)**
• **Vollenweider, Bruno**
**8864 Reichenburg (CH)**

(74) Vertreter: **Schaad, Balass, Menzl & Partner AG**
**Dufourstrasse 101**
**Postfach**
**8034 Zürich (CH)**

(56) Entgegenhaltungen:
**US-A- 3 679 337    US-A1- 2008 016 894**
**US-A1- 2008 268 192    US-A1- 2010 270 003**

EP 3 032 189 B1

# EP 3 032 189 B1

## Beschreibung

Die vorliegende Erfindung betrifft ein Erdwärmesondenrohr für eine Erdwärmesondenanlage.

Erdwärmesondenanlagen sind dem Fachmann bekannt und werden zur Nutzung der Erdwärme eingesetzt.

Dazu werden Erdwärmesondenrohre, die über ein als Sondenfuss bezeichnetes Verbindungsstück paarweise miteinander verbunden sind, in ein Bohrloch im Erdreich abgesenkt.

Im Betrieb wird ein fluider Wärmeträger durch ein erstes Erdwärmesondenrohr (Erdwärmesondenzulaufrohr) von einem in Erdbodennähe angeordnetem erstem Ende zu dessen entgegengesetzt angeordnetem zweitem Ende bzw. zum Sondenfuss geführt. Über den Sondenfuss wird der Wärmeträger umgelenkt und über ein zweites Erdwärmesondenrohr (Erdwärmesondenrücklaufrohr) von dessen zweitem Ende zu dessen erstem Ende geführt. Auf seinem Weg wird der Wärmeträger durch die über die Rohrwandung geleitete Erdwärme erwärmt, welche in der Regel mittels einer an die Erdwärmesondenrohre angeschlossenen Wärmepumpe in mechanische Energie umgewandelt wird.

Üblicherweise weisen Erdwärmesondenrohre eine hohlzylindrische Form auf. Als Beispiel für eine konkrete Ausführung eines Erdwärmesondenrohrs bzw. dessen Herstellung sei etwa auf die EP-A-2365027 verwiesen.

Um das Bohrloch nach dem Absenken der Erdwärmesondenrohre abzudichten, wird der verbleibende Hohlraum in der Regel mit einer Verpressmasse hinterfüllt, z.B. mit Bentonit oder Einpressmörtel. Diese Verpressmasse weist in der Regel eine gute Wärmeleitfähigkeit auf, wodurch eine gute Wärmeübertragung vom Erdreich zu den Erdwärmesondenrohren und letztendlich zum Wärmeträger gewährleistet werden soll.

Um die Betriebssicherheit der Anlage zu gewährleisten, sind die Erdwärmesondenrohre dahingehend dimensioniert, dem maximal zu erwartenden Druck standzuhalten.

Dieser maximal zu erwartende Druck ergibt sich für die vertikal verlegten Erdwärmesondenrohre einerseits aus dem hydrostatischen (Innen-)Druck des Wärmeträgers und andrerseits aus dem hydrostatischen (Aussen-)Druck der Verpressmasse, der dem Innendruck entgegenwirkt. Konkret muss das Erdwärmesondenrohr somit in der Regel lediglich dem Systemdruck der Erdwärmesondenanlage von 1 bis 5 bar und einem minimalen, sich aus dem Unterschied besagter hydrostatischen Drucke ergebenden Differenzdruck standhalten.

Allerdings kann es aufgrund geologischer Gegebenheiten vorkommen, dass die in das Bohrloch eingeführte Verpressmasse durch Klüfte abfliesst, was zur Bildung von Kavitäten innerhalb der Hinterfüllung führt. Mithin kann es vorkommen, dass bereichsweise dem hydrostatischen Innendruck kein hydrostatischer Aussendruck entgegenwirkt.

Im Sinne der Betriebssicherheit werden Erdwärmesondenrohre somit so ausgelegt, dass sie dem maximal zu erwartenden Innendruck auch in Abwesenheit eines entgegenwirkenden Aussendrucks standhalten können.

Eine zur Klassifizierung von Erdwärmesondenrohren bzw. zur Angabe von deren Druckfestigkeit gebräuchliche Kennzahl stellt der SDR-Wert (Standard Dimension Ratio) dar, welcher sich nach folgender Gleichung berechnet:

$$SDR = d_a/s,$$

wobei $d_a$ den Rohraussendurchmesser und s die Wandstärke bezeichnet.

Gängige Erdwärmesondenrohre weisen einen SDR-Wert von ca. 11 auf. Damit wird gewährleistet, dass das Erdwärmesondenrohr einem Druck von 20 bar standhält, welcher sich aus einem hydrostatischen Druck von 16 bar und einem Systemdruck von 4 bar ergibt. Für solche Erdwärmesondenrohre ergeben sich bei einer Absenkung bis zu einer Tiefe von ca. 160 m keine Probleme.

Für tiefer abgesenkte Erdwärmesondenrohre, wie aus der US 2010/027003 bekannt, ergibt sich allerdings das Problem eines beträchtlichen hydrostatischen Innendruckes. Dieses Problem wird dadurch verschärft, dass das Ausfüllen des Bohrloches mit der Verpressmasse in derart tiefen Lagen schwierig zu bewerkstelligen ist, was wiederum mit einem erhöhten Risiko für die Bildung von Kavitäten einhergeht.

Um diesem Problem zu begegnen, bietet sich für die gängigen hohlzylindrischen Rohre eine Verminderung des SDR-Werts in der Regel nicht an, da dies bei vorgegebenem Aussendurchmesser eine Vergrösserung der Wandstärke bedeutet, was einerseits mit einer Zunahme des Strömungswiderstands und andererseits mit einer Verminderung der Wärmeübertragung über die Rohrwandung einhergehen würde.

Die Aufgabe der vorliegenden Erfindung liegt nun darin, ein Erdwärmesondenrohr zur Verfügung zu stellen, welches auch bei Verlegung in sehr tiefe Lagen den dabei zu erwartenden Druckbelastungen standhalten kann, ohne dass deren Leistung gegenüber herkömmlichen Erdwärmesondenrohren wesentlich beeinträchtigt würde. Insbesondere soll das Erdwärmesondenrohr hinsichtlich seiner Wärmeübertragungseigenschaften und seinem auf den Wärmeträger wirkenden Strömungswiderstand vergleichbare wenn nicht gar verbesserte Eigenschaften aufweisen.

Die Erfindung wird durch den Gegenstand des Anspruchs 1 gelöst. Bevorzugte Ausführungsformen der Erfindung sind in den abhängigen Ansprüchen wiedergegeben.

Gemäss Anspruch 1 betrifft die vorliegende Erfindung ein Erdwärmesondenrohr. Erdwärmesondenrohre umfassen jeweils ein erstes Ende und ein vom ersten Ende um die Länge des Erdwärmesondenrohrs beabstandetes zweites Ende.

Das zweite Ende ist dabei dazu bestimmt, als vorlaufendes Ende ins Erdreich abgesenkt zu werden, und ist am jeweiligen Sondenfuss angeschlossen. Das erste Ende stellt das nachlaufende Ende dar. In Betrieb ist das erste Ende somit in Erdbodennähe angeordnet, während das zweite Ende an den die tiefste Stelle der Anlage bildenden Sondenfuss angeschlossen ist.

Das Erdwärmesondenrohr weist weiter einen dem ersten Ende zugewandten Längsabschnitt und einen dem zweiten Ende zugewandten, an den ersten Längsabschnitt anschliessenden zweiten Längsabschnitt auf.

Das Erdwärmesondenrohr ist nun dadurch gekennzeichnet, dass der SDR-Wert gemäss der Gleichung

$$SDR = Rohraussendurchmesser/Rohrwandstärke$$

über die Länge des ersten Längsabschnitts im Wesentlichen konstant ist und im zweiten Längsabschnitt in Richtung zum zweiten Ende hin abnimmt.

Im Allgemeinen verläuft das Erdwärmesondenrohr im verlegten Zustand mindestens entlang einer Geraden, d.h. der Rohrlängsachse. Diese steht in der Regel im Wesentlichen senkrecht zum Erdboden.

Indem im zweiten Längsbereich der SDR-Wert in Richtung zum zweiten Ende hin abnimmt, trägt das erfindungsgemässe Erdwärmesondenrohr dem Umstand Rechnung, dass in Betrieb der auf die Rohrwandung einwirkende hydrostatische Druck des Wärmeträgers mit zunehmender Tiefe zunimmt. Mithin erlaubt das erfindungsgemässe Erdwärmesondenrohr selbst bei einer Verlegung bis in eine Tiefe von ca. 320 m, bei entsprechenden Materialqualitäten gar bis in eine Tiefe von ca. 400 m, einen sicheren Betrieb der Erdwärmesondenanlage. Da damit für die Erdwärmesondenanlage ein Bereich erschlossen wird, in dem die Temperatur bzw. die nutzbare Erdwärmeenergiemenge höher liegt als in den gegenwärtig genutzten, bis in eine Tiefe von ca. 160 m hinabreichenden Bereiche, kann letztendlich eine sehr gute Energiebilanz erhalten werden.

Es wurde nun überraschenderweise festgestellt, dass trotz der Abnahme des SDR-Werts, d.h. - bei konstantem Aussendurchmesser - der Zunahme der Wandstärke, die Strömungswiderstands- bzw. Wärmeübertragungseigenschaften des Erdwärmesondenrohrs dann nur unwesentlich beeinträchtigt werden, wenn im ersten Längsabschnitt der SDR-Wert in Längsrichtung im Wesentlichen konstant ist. In der Regel wird dabei die Wandstärke des Erdwärmesondenrohrs - bei konstantem Aussendurchmesser - auf das für die Stabilität erforderliche Minimum beschränkt. Dieses Minimum ergibt sich einerseits aus der für die erdbodennahen Lagen erforderlichen Druckfestigkeit, andererseits aber auch aus der erforderlichen Festigkeit gegenüber jedwelcher anderen beim Absenken möglicherweise auf das Rohr wirkenden Zug-, Knick-, Biege- und Abriebbelastungen.

Insgesamt kann durch die im ersten Längsabschnitt auf ein Minimum beschränkbare, konstante Wandstärke im Vergleich zu herkömmlichen hohlzylindrischen Rohren, die über ihre gesamte Länge auf den maximal zu erwartenden Druck ausgelegt sind, eine bereichsweise Verminderung des Strömungswiderstands bzw. Erhöhung der Wärmeübertragung erhalten werden.

Dieser Effekt ist derart gross, dass die sich im zweiten Längsabschnitt ergebende Erhöhung im Strömungswiderstand bzw. Verminderung der Wärmeübertragung wenigstens annähernd kompensiert werden können.

Der SDR-Wert ist in jedem vom ersten Ende bemessenen Abstand $h_n$ im Allgemeinen derart, dass die Druckfestigkeit der Rohrwandung in besagtem Abstand $h_n$ grösser ist als der hydrostatische Druck einer Wärmeträgerflüssigkeitssäule mit einer dem Abstand $h_n$ entsprechenden Höhe. Somit wird der SDR-Wert über die gesamte Länge dem an der jeweiligen Stelle maximal zu erwartenden Druck angepasst. Mithin gewährleistet das erfindungsgemässe Erdwärmesondenrohr selbst dann eine sehr hohe Betriebssicherheit, wenn in der Verpressung Fehlstellen auftreten, d.h. wenn dem hydrostatischen Innendruck (des Wärmeträgers) kein hydrostatischer Aussendruck (der Verpressmasse) entgegenwirkt.

Als "Druckfestigkeit" wird im Kontext der vorliegenden Erfindung die Widerstandsfähigkeit des Erdwärmesondenrohrs gegenüber der Einwirkung von Druckkräften bezeichnet. Sie bezeichnet denjenigen Wert, ab dem der einwirkende Druck bzw. die Druckspannung zum Versagen des Körpers führen kann.

Im Zusammenhang mit Erdwärmesondenrohren wird für die Definition der Druckfestigkeit in der Regel von Wasser als Wärmeträger ausgegangen; bei der im Zusammenhang mit dem hydrostatischen Druck erwähnten Wärmeträgerflüssigkeitssäule handelt es somit in der Regel um eine Wassersäule. Wahlweise kann das Wasser ein Frostschutzmittel enthalten. Im Besonderen kann die Wärmeträgerflüssigkeitssäule sich auch auf eine Säule eines Wasser/Glykol-Gemischs beziehen.

Gemäss einer besonders bevorzugten Ausführungsform ist der Rohraussendurchmesser über die gesamte Länge des Erdwärmesondenrohrs konstant, was ein relativ einfaches Absenken mit den konventionellen Methoden erlaubt. Eine Änderung des SDR-Werts ergibt sich bei dieser Ausführungsform somit lediglich über eine Änderung der Wandstärke. Selbstverständlich sind von der Erfindung aber auch Ausführungsformen umfasst, in denen der Rohrinnendurchmesser über die gesamte Länge des Erdwärmesondenrohrs konstant ist. Eine Änderung des SDR-Werts und somit der Wanddicke geht in dieser Ausführungsform mit einer Änderung des Aussendurchmessers einher.

In diesem Zusammenhang ist weiter bevorzugt, dass der Rohraussendurchmesser im Bereich von 32 mm bis 50 mm liegt, bevorzugt von 40 mm bis 43 mm, und bevorzugter mindestens annähernd 40 mm oder 43 mm beträgt. Insbesondere ein Rohraussendurchmesser von 43 mm gewährleistet eine sehr einfache Handhabung und gleichzeitig sehr gute Strömungswiderstandseigenschaften.

Wie erwähnt schliesst der erste Längsabschnitt an den zweiten Längsabschnitt an. Vorzugsweise weist der zweite Längsabschnitts in dem an den unmittelbar an den ersten Längsabschnitt angrenzenden Bereich eine zum ersten Längsabschnitt identische Wandstärke auf. Somit geht der erste Längsabschnitt stufenlos in den zweiten Längsabschnitt über, was im Sinne eines möglichst guten Strömungsverhaltens des Wärmeträgers ist.

Gemäss einer besonders bevorzugten Ausführungsform erfolgt die Abnahme des SDR-Verhältnis im zweiten Längsabschnitt kontinuierlich. Da dadurch die Wandstärke auf das an der jeweiligen Stelle erforderliche Minimum beschränkt werden kann, kann auch die sich im zweiten Längsabschnitt ergebende Zunahme des Strömungswiderstands bzw. Abnahme der Wärmeübertragung auf ein Minimum beschränkt werden. Zudem liegt gemäss dieser Ausführungsform auch über die Länge des zweiten Längsabschnitts keine stufenartige Verengung des Querschnitts vor, was weiter zu einem optimalen Strömungsverhalten des Wärmeträgers beiträgt. Erfindungsgemäss erstreckt sich der erste Längsabschnitt vom ersten Ende bis zu einem Abstand $h_1$ von höchstens 160 m, bevorzugt höchstens 140 m, bevorzugter höchstens 120 m und am meisten bevorzugt höchstens 100 m hin. Der SDR-Wert liegt im ersten Längsabschnitt im Bereich von 11 bis 17. Gemäss einer beispielhaften Ausführungsform beträgt die Wandstärke ca. 2,6 mm bei einem Rohraussendurchmesser von 40 mm bzw. ca. 2,8 mm bei einem Rohraussendurchmesser von 43 mm.

Weiter ist bevorzugt, dass sich der zweite Längsabschnitt im Anschluss an den ersten Längsabschnitt bis zu einem vom ersten Ende bemessenen Abstand $h_2$ von höchstens 400 m, bevorzugt höchstens 370 m, bevorzugter höchstens 320 m hin erstreckt. Vorzugsweise nimmt das SDR-Verhältnis im zweiten Längsabschnitt bis auf 5 bis 10, bevorzugt 6 bis 9 ab. Je nach konkreter Ausgestaltung und Anordnung kann ein SDR-Wert von ca. 6,4 besonders bevorzugt sein.

Derart dimensionierte Erdwärmesondenrohre können selbst dann eine sehr hohe Betriebssicherheit gewährleisten, wenn sie bis in eine Tiefe von 320 m, je nach Materialqualität sogar bis in eine Tiefe von 400 m verlegt werden.

Prinzipiell kann das erfindungsgemässe Erdwärmesondenrohr sowohl in einer Erdwärmesonde mit (Doppel-)U-Anordnung oder einer Koaxial-Erdwärmesonde verwendet werden.

In einer Koaxial-Erdwärmesonde liegt dabei das Aussenrohr in Form des erfindungsgemässen Erdwärmesondenrohrs vor. Insbesondere hinsichtlich der Verwendung in einer (Doppel-)U-Anordnung betrifft die vorliegende Erfindung zudem eine Erdwärmesonde umfassend mindestens zwei Erdwärmesondenrohre wie oben beschrieben, von denen ein erstes ein Erdwärmesondenzulaufrohr und ein zweites ein Erdwärmesondenrücklaufrohr bildet, und weiter umfassend eine Umlenkung, über welche das Erdwärmesondenzulaufrohr mit dem Erdwärmesondenrücklaufrohr verbunden ist, wobei die Umlenkung aus einem anderen Material gebildet ist, als die Erdwärmesondenrohre.

Mithin erlaubt es die erfindungsgemässe Erdwärmesonde, die Umlenkung, d.h. den Sondenfuss, individuell an die sich ergebenden Anforderungen anzupassen, wobei die gängigen Geometrien und damit die üblicherweise verwendeten Spritzgusswerkzeuge beibehalten werden können. Im Besonderen können für die Umlenkung Materialien verwendet werden, die in erster Linie den sich am tiefsten Bereich ergebenden mechanischen Anforderungen gerecht werden, ohne dass diese (in der Regel) hochwertigen Materialien auch für die Erdwärmesondenrohre verwendet werden müssten. Die Betriebssicherheit der Erdwärmesonde wird dadurch nicht eingeschränkt.

Mithin ist bevorzugt, dass für den Sondenfuss ein Material verwendet wird, welches eine höhere Festigkeit aufweist, als das Material der Erdwärmesondenrohre. Das Erdwärmesondenrohr ist aus Kunststoff. Gemäss einer bevorzugten Ausführungsform ist auch die Umlenkung aus Kunststoff gebildet. Dies erlaubt den Aufbau einer Vollkunststofflösung, die korrosionsfrei ist und im Resultat zu einer sehr hohen Betriebssicherheit der Erdwärmesonde beiträgt.

Insbesondere bevorzugt ist dabei, dass die Erdwärmesondenrohre aus einem Polyolefin, insbesondere Polyethylen, und die Umlenkung aus Polyamid gebildet ist. Denkbar sind aber auch alle anderen Materialen, die für die beschriebenen Zwecke dem Fachmann als geeignet bekannt sind.

Weiter ist bevorzugt, dass die Erdwärmesonde zusätzlich einen Adapter zur Verbindung der Umlenkung mit dem jeweiligen Erdwärmesondenrohr aufweist. Dieser erlaubt es, das Erdwärmesondenrohr mit der Umlenkung stoffschlüssig zu verbinden, insbesondere zu verschweissen. Ein solcher Adapter ist vorzugsweise rohrförmig ausgestaltet und umfasst sowohl das Material der Umlenkung als auch das Material des jeweiligen Erdwärmesondenrohrs. Vorzugsweise liegen diese unterschiedlichen Materialien in der Umlenkung in Form unterschiedlicher Schichten vor.

Die Erfindung wird anhand der anliegenden Figur weiter veranschaulicht. Konkret zeigt:

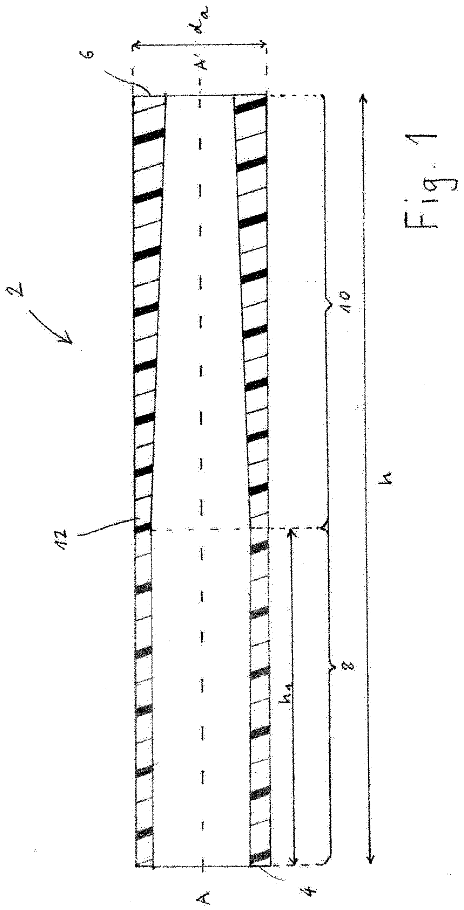

Fig. 1    rein schematisch einen Längsschnitt durch ein erfindungsgemässes Erdwärmesondenrohr.

Das in Fig. 1 gezeigte Erdwärmesondenrohr 2 weist eine Rohrlängsachse A-A' auf, welche gleichzeitig eine Rotationssymmetrieachse darstellt. Der Aussendurchmesser $d_a$ des Erdwärmesondenrohrs 2 ist über die gesamte Länge hin konstant.

Das Erdwärmesondenrohr 2 umfasst ein erstes Ende 4 und ein vom ersten Ende um die Länge h des Erdwärmesondenrohrs 2 beabstandetes zweites Ende 6.

Beim Absenken in Richtung entlang der Rohrlängsachse A-A' stellt das zweite Ende 6 das vorlaufende Ende dar. In der Regel ist dabei ein Sondenfuss an das zweite Ende 6 angeschlossen, über welchen das Erdwärmesondenrohr mit einem weiteren Erdwärmesondenrohr verbunden ist.

Gegenüber dem abgesenkten zweiten Ende 6 ist das erste Ende 4 in Betrieb in Erdbodennähe angeordnet und in der Regel über ein Sammelrücklaufrohr bzw. ein Sammelzulaufrohr mit einer Wärmepumpe verbunden (nicht gezeigt).

Vom ersten Ende 4 her erstreckt sich ein erster Längsabschnitt 8 in Richtung zum zweiten Ende 6 hin, konkret bis zum vom ersten Ende 4 bemessenen Abstand $h_1$.

Unmittelbar anschliessend an den ersten Längsabschnitt 8 liegt ein zweiter Längsabschnitt 10, der sich in der gezeigten Ausführungsform bis zum zweiten Ende 6 hin erstreckt. Somit entspricht der vom ersten Ende 4 bemessene Abstand $h_2$, bis zu dem sich der zweite Längsabschnitt 10 erstreckt, der Länge h. In Konsequenz beträgt die Länge des zweiten Längsabschnitts h - $h_1$.

Die Rohrwandung 12 des Erdwärmesondenrohrs 2 weist im ersten Längsabschnitt 8 eine konstante Wandstärke s auf. Da wie oben erwähnt der Aussendurchmesser $d_a$ über die gesamte Länge h des Erdwärmesondenrohrs 2 konstant ist, ergibt sich im ersten Längsabschnitt 8 ein über deren Länge konstanter SDR-Wert.

Gemäss einer ersten konkreten Ausführungsform (Beispiel 1) weist der erste Längsabschnitt 8 des Erdwärmesondenrohrs 2 bei einem Aussendurchmesser $d_a$ von 40 mm eine konstante Wandstärke s von 2,6 mm auf, was einem SDR-Wert von ca. 15,3 entspricht.

Gemäss einer zweiten konkreten Ausführungsform (Beispiel 2) beträgt die Wandstärke s im ersten Längsabschnitt 2,8 mm bei einem Aussendurchmesser $d_a$ von 43 mm; dies entspricht einem SDR-Wert von ca. 15,3. Beispielsweise weist der erste Längsabschnitt 8 dieser konkreten Beispiele 1 und 2 eine Länge von ca. 100 m auf.

Im zweiten Längsabschnitt 10 nimmt die Wandstärke s in Richtung zum zweiten Ende 6 hin linear zu. Beim erwähnten, über die gesamte Länge h konstanten Aussendurchmesser $d_a$ ergibt sich somit eine lineare Abnahme des SDR-Werts.

Gemäss konkretem Beispiel 1 mit einem konstanten Aussendurchmesser $d_a$ von 40 mm nimmt im zweiten Längsabschnitt 10 die Wandstärke s linear von 2,6 mm auf 4,5 mm zu, was einer linearen Abnahme des SDR-Verhältnisses von 15,3 auf 8,9 entspricht. Dabei erstreckt sich gemäss Beispiel 1 der zweite Längsabschnitt 10 bis zu einem vom ersten Ende 4 bemessenen Abstand $h_2$ von 210 m, welches in der gezeigten Ausführungsform der gesamten Länge h des Erdwärmesondenrohrs 2 entspricht. Der zweite Längsabschnitt 10 weist somit in diesem Beispiel eine Länge von 110 m auf.

Gemäss konkretem Beispiel 2 mit einem konstanten Aussendurchmesser $d_a$ von 43 mm nimmt im zweiten Längsabschnitt 10 die Wandstärke s linear von 2,8 mm auf 6,6 mm zu, was einer linearen Abnahme des SDR-Verhältnisses von 15,3 auf ca. 6,6 entspricht. Dabei erstreckt sich gemäss Beispiel 2 der zweite Längsabschnitt 10 bis zu einem vom ersten Ende 4 bemessenen Abstand $h_2$ von 320 m, welches in der gezeigten Ausführungsform der gesamten Länge h des Erdwärmesondenrohrs 2 entspricht. Der zweite Längsabschnitt 10 weist somit in diesem Beispiel eine Länge von 220 m auf.

Aus den angegebenen Dimensionen ist ersichtlich, dass das beschriebene Erdwärmesondenrohr in der Figur nicht massstäblich, sondern lediglich schematisch dargestellt ist.

Für Beispiel 1 wurde bei einer Strömungsrate von 1,7 m$^3$/h über die Länge des Erdwärmesondenrohrs ein Druckverlust $\Delta$p von 0,277 bar ermittelt, welcher deutlich tiefer liegt als derjenige für ein herkömmliches hohlzylindrisches Erdwärmesondenrohr mit einem über die gesamte Rohrlänge konstanten SDR von 11 (0,333 bar).

Für Beispiel 2 wurde bei einer Strömungsrate von 2,6 m$^3$/h über die Länge des Erdwärmesondenrohrs ein Druckverlust $\Delta$p von 0,840 bar ermittelt, welcher deutlich tiefer liegt als derjenige für ein herkömmliches hohlzylindrisches Erdwärmesondenrohr mit einem über die gesamte Rohrlänge konstanten SDR von 11 (1,048 bar).

Im Übrigen wurde für das Erdwärmesondenrohr der vorliegenden Erfindung eine vergleichbare Wärmeleitfähigkeit gemessen wie für ein herkömmliches hohlzylindrisches Erdwärmesondenrohr mit einem über die gesamte Rohrlänge konstanten SDR von 11. Im konkreten Fall betrug die mittlere Wärmeleitfähigkeit für die Ausführungsform der Erfindung ca. 2,5 W/m/K, was in etwa dem Wert für das hohlzylindrische Erdwärmesondenrohr entspricht.

Bezugszeichenliste

| | |
|---|---|
| 2 | Erdwärmesondenrohr |
| 4 | erstes Ende |
| 6 | zweites Ende |
| 8 | erster Längsabschnitt |
| 10 | zweiter Längsabschnitt |
| 12 | Rohrwandung |
| A-A' | Rohrlängsachse |
| $d_a$ | Aussendurchmesser |
| h | Länge des Erdwärmesondenrohrs |
| $h_1$ | vom ersten Ende bemessener Abstand, bis zu dem sich der erste Längsabschnitt erstreckt; Länge des ersten Längsabschnitts |
| $h_2$ | vom ersten Ende bemessener Abstand, bis zu dem sich der zweite Längsabschnitt erstreckt |

**Patentansprüche**

1. Erdwärmesondenrohr für eine Erdwärmesondenanlage, welches für eine Absenkung bis zu einer Tiefe von mehr als 160 m ausgelegt ist und mehr als 160 m lang ist, umfassend ein erstes Ende (4) und ein vom ersten Ende um die Länge h des Erdwärmesondenrohrs beabstandetes zweites Ende (6), wobei das zweite Ende (6) dazu bestimmt ist, als vorlaufendes Ende ins Erdreich abgesenkt zu werden und am jeweiligen Sondenfuss angeschlossen zu werden, einen dem ersten Ende (4) zugewandten ersten Längsabschnitt (8) und
einen dem zweiten Ende (6) zugewandten, an den ersten Längsabschnitt (8) anschliessenden zweiten Längsabschnitt (10), wobei der SDR-Wert gemäss der Gleichung

$$SDR = Rohraussendurchmesser/Rohrwandstärke$$

im ersten Längsabschnitt (8), welcher sich vom ersten Ende (4) bis zu einem Abstand $h_1$ von höchstens 160 m erstreckt, über die Länge des ersten Längsabschnitts (8) im Wesentlichen konstant ist und im zweiten Längsabschnitt (10) in Richtung zum zweiten Ende (6) hin abnimmt, und wobei sich der zweite Längsabschnitt (10) im Anschluss an den ersten Längsabschnitt (8) bis zu einem vom ersten Ende (4) bemessenen Abstand $h_2$ von höchstens 400 m erstreckt,
**dadurch gekennzeichnet,**
**dass** das Erdwärmesondenrohr aus Kunststoff ist und der SDR-Wert im ersten Längsabschnitt (8) im Bereich von 11 bis 17 liegt.

2. Erdwärmesondenrohr gemäss Anspruch 1, **dadurch gekennzeichnet, dass** der SDR-Wert in jedem vom ersten Ende (4) bemessenen Abstand $h_n$ derart ist, dass die Druckfestigkeit der Rohrwandung (12) in besagtem Abstand $h_n$ grösser ist als der hydrostatische Druck einer Wassersäule mit einer dem Abstand $h_n$ entsprechenden Höhe.

3. Erdwärmesondenrohr gemäss einem der Ansprüche 1 bis 2, **dadurch gekennzeichnet, dass** der SDR-Wert im zweiten Längsabschnitt (10) kontinuierlich abnimmt.

4. Erdwärmesondenrohr gemäss einem der Ansprüche 1 bis 3, **dadurch gekennzeichnet, dass** der erste Längsabschnitt (8) sich vom ersten Ende (4) bis zu einem Abstand $h_1$ von höchstens 140 m, bevorzugt höchstens 120 m und am meisten bevorzugt höchstens 100 m hin erstreckt.

5. Erdwärmesondenrohr gemäss einem der Ansprüche 1 bis 4, **dadurch gekennzeichnet, dass** sich der zweite Längsabschnitt (10) im Anschluss an den ersten Längsabschnitt (8) bis zu einem vom ersten Ende (4) bemessenen Abstand $h_2$ von höchstens 370 m, bevorzugter höchstens 320 m hin erstreckt.

6. Erdwärmesondenrohr gemäss einem der Ansprüche 1 bis 5, **dadurch gekennzeichnet, dass** der SDR-Wert im zweiten Längsabschnitt (10) bis auf 5 bis 10, bevorzugt 6 bis 9, abnimmt.

7. Erdwärmesondenrohr gemäss einem der Ansprüche 1 bis 6, **dadurch gekennzeichnet, dass** der Rohraussendurchmesser über die gesamte Länge des Erdwärmesondenrohrs konstant ist.

8. Erdwärmesondenrohr gemäss einem der Ansprüche 1 bis 7, **dadurch gekennzeichnet, dass** der Rohraussendurchmesser im Bereich von 32 mm bis 50 mm liegt, bevorzugt von 40 mm bis 43 mm, und bevorzugter mindestens annähernd 40 mm oder 43 mm beträgt.

9. Erdwärmesondenanlage enthaltend paarweise über einen in Form einer Umlenkung vorliegenden Sondenfuss miteinander verbundene Erdwärmesondenrohre (2) gemäss einem der vorhergehenden Ansprüche.

10. Erdwärmesondenanlage gemäss Anspruch 9, **dadurch gekennzeichnet, dass** sowohl die Erdwärmesondenrohre (2) als auch der Sondenfuss aus Kunststoff gebildet sind.

11. Erdwärmesondenanlage gemäss einem der Ansprüche 9 bis 10, **dadurch gekennzeichnet, dass** sie zusätzlich einen Adapter zur Verbindung des Sondenfusses mit dem jeweiligen Erdwärmesondenrohr (2) aufweist.

12. Erdwärmesondenanlage gemäss Anspruch 11, **dadurch gekennzeichnet, dass** der Adapter rohrförmig ausgestaltet ist und sowohl das Material des Sondenfusses als auch das Material des jeweiligen Erdwärmesondenrohrs (2) umfasst.

**Claims**

1. Geothermal probe tube for a geothermal probe system, said geothermal probe tube being designed to be lowered up to a depth of more than 160 m and which is more than 160 m long, comprising a first end (4) and a second end (6), arranged at a distance from the first end by the length h of the geothermal probe tube, wherein the second end (6) is intended to be lowered into the ground as a leading end and to be connected to the respective probe foot, a first longitudinal portion (8), towards the first end (4), and a second longitudinal portion (10), towards the second end (6) and following on from the first longitudinal portion (8), wherein the SDR value according to the equation

$$\text{SDR} = \text{tube outside diameter/tube wall thickness}$$

is substantially constant over the length of the first longitudinal portion (8), which extends from the first end (4) to a distance $h_1$ of at most 160 m, and in the second longitudinal portion (10) decreases in the direction of the second end (6), and wherein the second longitudinal portion (10) extends following on from the first longitudinal portion (8) to a distance $h_2$ taken from the first end (4) of at most 400 m, **characterized in that** the geothermal probe tube is made of plastic and the SDR value in the first longitudinal portion (8) lies in the range from 11 to 17.

2. Geothermal probe tube according to claim 1, **characterized in that** the SDR value at every distance $h_n$ taken from the first end (4) is such that the compressive resistance of the tube wall (12) at said distance $h_n$ is greater than the hydrostatic pressure of a water column of a height corresponding to the distance $h_n$.

3. Geothermal probe tube according to one of claims 1 to 2, **characterized in that** the SDR value in the second longitudinal portion (10) decreases continuously.

4. Geothermal probe tube according to one of the claims 1 to 3, **characterized in that** the first longitudinal portion (8) extends from the first end (4) to a distance $h_1$ of at most 140 m, preferably at most 120 m and most preferably at most 100 m.

5. Geothermal probe tube according to one of the claims 1 to 4, **characterized in that** the second longitudinal portion (10) extends following on from the first longitudinal portion (8) to a distance $h_2$ taken from the first end (4) of at most 370 m, preferably at most 320 m.

6. Geothermal probe tube according to one of the claims 1 to 5, **characterized in that** the SDR value in the second longitudinal portion (10) decreases to 5 to 10, preferably 6 to 9.

7. Geothermal probe tube according to one of the claims 1 to 6, **characterized in that** the tube outside diameter is constant over the entire length of the geothermal probe tube.

8. Geothermal probe tube according to one of the claims 1 to 7, **characterized in that** the tube outside diameter lies in the range from 32 mm to 50 mm, preferably from 40 mm to 43 mm, and more preferably is at least approximately 40 mm or 43 mm.

9. Geothermal probe system comprising in pairs geothermal probe tubes (2) according to one of the preceding claims, said geothermal probe tubes being connected by way of a probe foot in the form of a diverter.

10. Geothermal probe system according to claim 9, **characterized in that** the geothermal probe tubes (2) as well as the probe foot are made of plastic.

11. Geothermal probe system according to one of claims 9 to 10, **characterized in that** it further comprises an adapter to connect the probe foot with each of the geothermal probe tubes (2).

12. Geothermal probe system according to claim 11, **characterized in that** the adapter is tubular and comprises the material of the probe foot as well as the material of each of the geothermal probe tubes (2) .


**Revendications**

1. Tuyau de sonde géothermique pour une installation de sonde géothermique, ledit tuyau de sonde géothermique étant conçu pour une descente jusqu'à une profondeur de plus de 160 m et étant de plus de 160 m de long, comprenant une première extrémité (4) et une seconde extrémité (6) espacée de la première extrémité d'une longueur h du tuyau de sonde géothermique, la seconde extrémité (6) étant prévue pour être descendue dans la terre en tant qu'une extrémité avant et pour être connectée au pied de sonde respectif, une première partie longitudinale (8), orientée vers la première extrémité (4), et une seconde partie longitudinale (10), orientée vers la seconde extrémité (6) et raccordée à la première partie longitudinale (8), la valeur SDR selon l'équation

$$\texttt{SDR = diamètre extérieur du tuyau}$$
$$\texttt{/ épaisseur de la paroi du tuyau}$$

étant essentiellement constante sur la longueur de la première partie longitudinale (8), qui s'étend de la première extrémité (4) jusqu'à une distance $h_1$ d'au plus 160 m, et diminuant dans la direction de la seconde extrémité (6) dans la seconde partie longitudinale (10), et la seconde partie longitudinale (10) raccordée à la première partie longitudinale (8) s'étendant jusqu'à une distance $h_2$ mesurée depuis la première extrémité (4) d'au plus 400 m, **caractérisé en ce que** le tuyau de sonde géothermique est en plastique et la valeur SDR dans la première partie longitudinale (8) se situe dans une plage de 11 à 17.

2. Tuyau de sonde géothermique selon la revendication 1, **caractérisé en ce que** la valeur SDR à chaque distance $h_n$ mesurée depuis la première extrémité (4) est telle que la résistance à la pression de la paroi du tuyau (12) à ladite distance $h_n$ est plus grande que la pression hydrostatique d'une colonne d'eau avec une hauteur correspondant à la distance $h_n$.

3. Tuyau de sonde géothermique selon l'une des revendications 1 à 2, **caractérisé en ce que** la valeur SDR dans la seconde partie longitudinale (10) se réduit continuellement.

4. Tuyau de sonde géothermique selon l'une des revendications 1 à 3, **caractérisé en ce que** la première partie longitudinale (8) s'étend de la première extrémité (4) jusqu'à une distance $h_1$ d'au plus 140 m, préférablement au plus 120 m et de façon la plus préférée au plus 100 m.

5. Tuyau de sonde géothermique selon l'une des revendications 1 à 4, **caractérisé en ce que** la seconde partie longitudinale (10) raccordée à la première partie longitudinale (8) s'étend jusqu'à une distance $h_2$ mesurée depuis première extrémité (4) d'au plus 370 m, préférablement au plus 320 m.

6. Tuyau de sonde géothermique selon l'une des revendications 1 à 5, **caractérisé en ce que** la valeur SDR dans la seconde partie longitudinale (10) se réduit de 5 à 10, préférablement 6 à 9.

7. Tuyau de sonde géothermique selon l'une des revendications 1 à 6, **caractérisé en ce que** le diamètre extérieur du tuyau est constant sur toute la longueur du tuyau de sonde géothermique.

8. Tuyau de sonde géothermique selon l'une des revendications 1 à 7, **caractérisé en ce que** le diamètre extérieur du tuyau se situe dans une plage de 32 mm à 50 mm, préférablement de 40 mm à 43 mm, et plus préférablement est d'au moins approximativement 40 mm ou 43 mm.

9. Système de sonde géothermique comprenant par paire des tuyaux de sonde géothermique (2) selon l'une des revendications précédentes, lesdits tuyaux de sonde géothermique étant connectés au moyen d'un pied de sonde en forme de déviation.

10. Système de sonde géothermique selon la revendication 9, **caractérisé en ce que** les tuyaux de sonde géothermique (2) ainsi que le pied de sonde sont faits en plastique.

11. Système de sonde géothermique selon l'une des revendications 9 à 10, **caractérisé en ce qu'**il comprend en outre un adaptateur pour connecter le pied de sonde avec chacun des tuyaux de sonde géothermique (2).

12. Système de sonde géothermique selon la revendication 11, **caractérisé en ce que** l'adapteur est tubulaire et comprend le matériau du pied de sonde ainsi que le matériau de chacun des tuyaux de sonde géothermique (2).

Fig. 1

**IN DER BESCHREIBUNG AUFGEFÜHRTE DOKUMENTE**

**In der Beschreibung aufgeführte Patentdokumente**

- EP 2365027 A
- US 2010027003 A